# EUROPÄISCHE PATENTSCHRIFT

(11) **EP 0 544 847 B1**
(45) Veröffentlichungstag und Bekanntmachung des Hinweises auf die Patenterteilung: **05.07.1995**
(21) Anmeldenummer: 92909204.7
(22) Anmeldetag: 21.04.1992
(51) Int. Cl.: B60R 19/36

(54) **STOSSFÄNGERSYSTEM FÜR KRAFTFAHRZEUGE**
BUMPER SYSTEM FOR MOTOR VEHICLES
SYSTEME PARE-CHOCS POUR VEHICULES A MOTEUR

(30) Priorität: 28.06.1991 DE 4121497
(43) Veröffentlichungstag der Anmeldung: 09.06.1993
(73) Patentinhaber: AUDI AG, 85002 Ingolstadt (DE)
(72) Erfinder: MIES, Karl-Heinz, D-8442 Geiselhöring (DE)
(74) Vertreter: Engelhardt, Harald
(86) Internationale Anmeldenummer: EP9200883
(87) Internationale Veröffentlichungsnummer: WO9300232

(56) Entgegenhaltungen:
- EP-A- 0 072 323
- DE-A- 2 222 383
- DE-A- 2 357 419
- DE-A- 2 441 557
- DE-C- 3 928 141
- US-A- 3 860 258
- US-A- 3 908 781
- US-A- 4 399 887

## Beschreibung

Die Erfindung betrifft ein Stoßfängersystem für ein Kraftfahrzeug gemäß dem Oberbegriff des Patentanspruchs 1.

Ein derartiges Stoßfangersystem ist bereits aus der US-A-3 908 781 bekannt. Das bekannte Stoßfängersystem enthält wenigstens einen Pralldämpfer, der einen Pralldämpferkolben und einen ihn aufnehmenden Pralldämpferzylinder aufweist, sowie eine Detektoreinrichtung zur Ermittlung der Relativgeschwindigkeit zwischen Pralldämpferkolben und Pralldämpferzylinder. Sobald eine schwere Kollision zwischen dem Kraftfahrzeug und einem Hindernis auftritt, wird ein Signal in einer Einrichtung zum Schutz der Kraftfahrzeuginsassen erzeugt.

Ferner ist es aus der US-A-3 789 948 bereits bekannt, die Dämpfungskraft eines Pralldämpfers in Abhängigkeit von der Fahrzeuggeschwindigkeit zu verändern. Dabei wird die Dämpfungskraft des Pralldämpfers um so größer eingestellt, je höher die Fahrzeuggeschwindigkeit ist.

Der Erfindung liegt die Aufgabe zugrunde, bei einem Stoßfängersystem der eingangs genannten Art für eine Vergrößerung des Wirkungsgrads des Pralldämpfers im Falle eines stärkeren Aufpralls zu sorgen.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein Stoßfängersystem nach der Erfindung ist dadurch gekennzeichnet, daß
- ein Sperrmechanismus vorgesehen ist, der unmittelbar nach Überschreiten eines vorgebbaren Schwellenwerts durch die Relativgeschwindigkeit die Relativbewegung zwischen Pralldämpferkolben und Pralldämpferzylinder blockiert und
- der Pralldämpfer so ausgebildet ist, daß er nach Blockieren der Relativbewegung zwischen Pralldämpferkolben und Pralldämpferzylinder selbst Verformungsenergie aufnehmen kann.

Beim erfindungsgemäßen Stoßfängersystem wird also zunächst die Aufprallgeschwindigkeit des Kraftfahrzeugs auf ein Hindernis bzw. die Relativgeschwindigkeit zwischen Pralldämpferkolben und Pralldämpferzylinder erfaßt. Ist der Wert der Aufprallgeschwindigkeit bzw. Relativgeschwindigkeit größer als ein vorbestimmter Schwellenwert, bei dem der Pralldämpfer die Kräfte gerade noch durch Verschieben des Pralldämpferkolbens aufzunehmen vermag, wird der Sperrmechanismus aktiviert, durch den praktisch die übliche Funktion des Pralldämpfers außer Kraft gesetzt wird. Der Pralldämpfer selbst kann jetzt plastisch verformt werden, so daß er mehr Energie umwandeln kann als dies durch die normale Pralldämpferfunktion an sich möglich wäre. Die Außerkraftsetzung des Pralldämpfers erfolgt schon zu einem sehr frühen Zeitpunkt, wenn also der Pralldämpferkolben erst zu einem sehr geringen Teil in den Pralldämpferzylinder eingefahren worden ist. Wird der Pralldämpfer zu diesem frühen Zeitpunkt blockiert, so steht er prinzipiell für eine plastische Verformung über seine gesamte Länge zur Verfügung, also sowohl im Bereich des Pralldämpferkolbens als auch im Bereich des Pralldämpferzylinders.

Nach einer Ausgestaltung der Erfindung kann auch nur der Pralldämpferkolben zur Aufnahme der Verformungsenergie verformbar sein. In diesem Fall läßt sich bei nicht zu starkem Aufprall eine Beschädigung des Pralldämpferzylinders unter Umständen vermeiden, was zu geringeren Reparaturkosten führt, da mit dem Pralldämpferzylinder noch weitere Detektor- und Steuereinrichtungen verbunden sein können, wie noch ausgeführt wird, die dann ebenfalls unbeschädigt bleiben.

Vorzugsweise ist der Pralldämpferkolben faltenbalgartig ausgebildet, um für den Fall der Aufnahme zusätzlicher Bewegungsenergie gezielt plastisch verformt werden zu können.

Nach einer Ausgestaltung der Erfindung weist der Sperrmechanismus einen senkrecht zur Längsrichtung des Pralldämpferkolbens in diesen einfahrbaren Verriegelungsbolzen auf, der sich am Pralldämpferzylinder mittelbar oder unmittelbar abstützt. Wird festgestellt, daß die Relativgeschwindigkeit zwischen Pralldämpferkolben und Pralldämpferzylinder den vorgegebenen Schwellenwert übersteigt, kann also der Pralldämpfer allein durch Verschiebung des Pralldämpferkolbens die Aufprallenergie nicht mehr absorbieren, so wird der Pralldämpferkolben mit Hilfe des Verriegelungsbolzens gegenüber dem Pralldämpferzylinder verriegelt, so daß Pralldämpferkolben und Pralldämpferzylinder über den Verriegelungsbolzen starr miteinander verbunden sind. Der Verriegelungsbolzen kann dabei in eine seitliche Ausnehmung oder in eine radiale Öffnung des Pralldämpferkolbens hineingeschossen werden, beispielsweise durch Federkraft, wobei er jedoch über den Pralldämpferkolben hinaussteht, um gegen den Pralldämpferzylinder schlagen und damit die Bewegung des Pralldämpferkolbens relativ zum Pralldämpferzylinder unterbinden zu können.

Nach einer anderen Ausgestaltung der Erfindung weist der Sperrmechanismus halbringförmige Verriegelungselemente auf, die in eine Umfangsnut des Pralldämpferkolbens einführbar sind und sich am Pralldämpferzylinder abstützen. Die halbringförmigen Verriegelungselemente werden für den Fall, daß die Relativgeschwindigkeit den Schwellenwert überschreitet, von gegenüberliegenden Seiten gegen den Pralldämpferkolben gefahren und in seine am Umfang verlaufenden Quernuten eingeführt. Sie ragen dabei etwas aus den Quernuten heraus und schlagen mit diesem Teil mittelbar oder unmittelbar gegen den Pralldämpferzylinder, so daß sich der Pralldämpferkolben nicht mehr in den Pralldämpferzylinder hineinfahren läßt.

Verriegelungsbolzen und Verriegelungselemente sind so stabil ausgebildet, daß sie selbst bei Verformung des Pralldämpferkolbens nicht nachgeben bzw. unverformt bleiben.

Prinzipiell ist es möglich, entweder den Pralldämpferzylinder oder den Pralldämpferkolben mit der Karosserie des Kraftfahrzeugs fest bzw. starr zu verbinden. Vorzugsweise wird jedoch der Pralldämpferzylinder mit der Kraftfahrzeugkarosserie fest verbunden, während der Pralldämpferkolben fest mit einem im Bereich der Stoßstange des Kraftfahrzeugs liegenden Träger verbunden ist. Der Verriegelungsbolzen bzw. die Verriegelungselemente können sich dabei an einer äußeren Stirnseite des Pralldämpferzylinders abstützen, um den Pralldämpferkolben zu blockieren.

Nach einer sehr vorteilhaften Weiterbildung der Erfindung ist es möglich, den Verriegelungsbolzen bzw. die Verriegelungselemente mit Hilfe eines Schmelzdrahts daran zu hindern, über Federkräfte mit dem Pralldämpferkolben in Eingriff zu kommen. Erst wenn der Schmelzdraht durch einen Arbeitsstrom geschmolzen wird und reißt, sind die Federkräfte in der Lage, den Verriegelungsbolzen bzw. die Verriegelungselemente mit dem Pralldämpferkolben in Eingriff zu bringen. Der Schmelzdraht liegt praktisch parallel zu einer den Verriegelungsbolzen bzw. die Verriegelungselemente antreibenden Feder.

Der genannte Arbeitsstrom läßt sich durch eine Detektoreinrichtung erzeugen, durch die festgestellt wird, ob die Relativgeschwindigkeit zwischen Pralldämpferkolben und Pralldämpferzylinder den vorbestimmten Schwellenwert überschritten hat. Ist dies der Fall, so wird ein entsprechender Schalter der Detektoreinrichtung geschlossen, was zu dem genannten Stromfluß führt.

Die genannte Detektoreinrichtung kann z. B. eine pneumatische, mechanische, elektro-optische oder elektro-magnetische Detektoreinrichtung sein.

Der Pralldämpferkolben kann z. B. als Kolben mit praktisch einheitlichem Durchmesser ausgebildet sein, sieht man von seinem faltenbalgartig ausgebildeten Bereich oder von Umfangsnuten für den Sperrmechanismus bzw. für eine weitere gezielte Verformung ab. Es ist aber auch möglich, den Pralldämpferkolben am kopfseitigen Ende (zum Pralldämpferzylinder weisend) mit einem größeren Durchmesser auszubilden. Sein rückseitiges Ende, das z. B. zylindrisch sein kann, würde dann als Kolbenstange arbeiten, die an ihrem freien Ende mit dem im Bereich der Stoßstange liegenden Träger (Stoßfänger) verbunden ist. Dieser zylindrische Kolbenabschnitt, der z. B. kopfseitig eine Kolbenplatte trägt, wäre dann plastisch verformbar, beispielsweise durch Vorsehen eines faltenbalgartigen Bereichs, etc. Grundsätzlich gilt also das für den Pralldämpferkolben Gesagte auch für den genannten zylindrischen bzw. halbzylindrischen Kolbenabschnitt.

Die Erfindung wird nachfolgend unter Bezugnahme auf die Zeichnung näher beschrieben. Es zeigen:
- Fig. 1: einen Längsschnitt durch ein Stoßfängersystem im Bereich eines Pralldämpfers nach einem ersten Ausführungsbeispiel,
- Fig. 2: einen senkrecht zur Längsrichtung liegenden Schnitt durch den Pralldämpfer nach Fig. 1 im Bereich des Sperrmechanismus,
- Fig. 3: einen Längsschnitt durch ein Stoßfängersystem im Bereich eines Pralldämpfers nach einem zweiten Ausführungsbeispiel,
- Fig. 4: einen senkrecht zur Längsrichtung liegenden Schnitt durch den Pralldämpfer nach Fig. 3 im Bereich des Sperrmechanismus,
- Fig. 5: eine Detektoreinrichtung mit Fliehkraftschalter in Draufsicht,
- Fig. 6: eine Axialansicht der Detektoreinrichtung nach Fig. 5, und
- Fig. 7: einen Längsschnitt durch einen Pralldämpfer mit einer optischen Detektoreinrichtung.

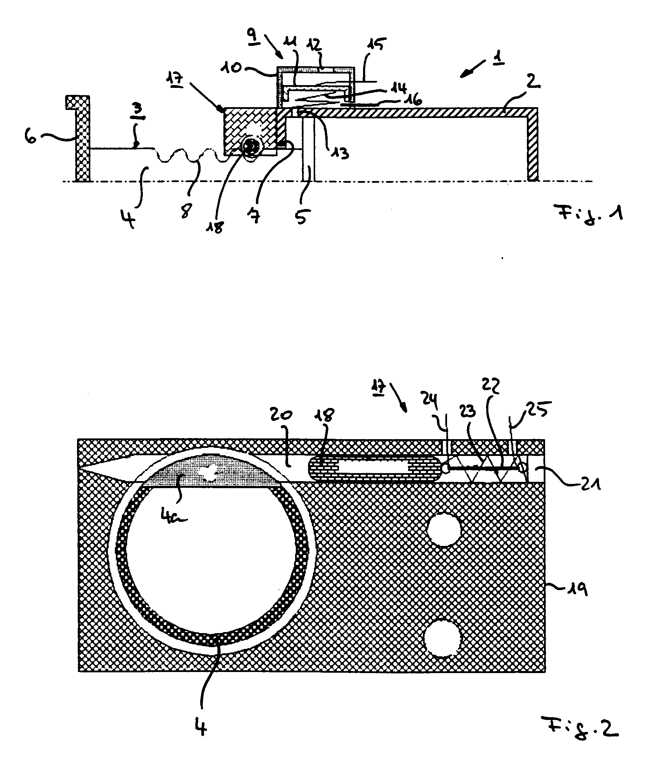

Die Fig. 1 zeigt ein Ausführungsbeispiel eines Stoßfängersystems nach der Erfindung, das einen oder mehrere Pralldämpfer aufweisen kann. Entsprechend der Fig. 1 besteht ein Pralldämpfer 1 aus einem Pralldämpferzylinder 2, der an einer nicht dargestellten Karosserie des Kraftfahrzeugs starr befestigt ist. Ein Pralldämpferkolben 3 besteht aus einem Kolbenzylinder 4, an dessen einer Stirnseite eine Kolbenplatte 5 mit größerem Durchmesser fest angeordnet ist. Mit der anderen Stirnseite des Kolbenzylinders 4 ist ein Träger 6 fest verbunden, der im Bereich der Stoßstange des Kraftfahrzeugs zu liegen kommt und als Stoßfänger dient. Der Kolbenzylinder 4 ragt durch eine stirnseitige Öffnung 7 des Pralldämpferzylinders 2 in diesen hinein, wobei die Kolbenplatte 5 innerhalb des Pralldämpferzylinders 2 zu liegen kommt. Diese Kolbenplatte 5 liegt gleitend an den Innenwänden des Pralldämpferzylinders 2 an. Der Pralldämpfer 1 weist ein vorbestimmtes Dämpfungsverhalten auf, so daß sich Stöße auf den Träger 6 abfangen lassen, indem der Pralldämpferkolben 3 in den Pralldämpferzylinder 2 hineingeschoben wird.

In einem Umfangsbereich 8 ist der Kolbenzylinder 4 des Pralldämpferkolbens 3 faltenbalgartig ausgebildet, weist also eine gewellte Mantelfläche auf. Hierdurch wird erreicht, daß sich der Kolbenzylinder 4 des Pralldämpferkolbens 3 plastisch verformen kann, um Bewegungsenergie abzubauen, wenn der Pralldämpferkolben 3 gegenüber dem Pralldämpferzylinder 2 verriegelt bzw. blockiert ist.

Eine Verriegelung des Pralldämpferkolbens 3 gegenüber dem Pralldämpferzylinder 2 erfolgt dann, wenn die Relativgeschwindigkeit zwischen beiden so groß ist, daß die Dämpfung des Pralldämpfers 1 durch Verschiebung des Pralldämpferkolbens 3 nicht mehr ausreicht, einen auf den Träger 6 wirkenden Stoß wirksam aufzufangen bzw. vollständig abzubauen. In diesem Fall wird der Wirkungsgrad des Pralldämpfers 1 dadurch vergrößert, daß Pralldämpferkolben 3 und Pralldämpferzylinder 2 zueinander blockiert werden, so daß sich der Pralldämpfer 1 im Bereich des Pralldämpferkolbens 3 plastisch verformen kann, wodurch sich mehr Bewegungsenergie umwandeln läßt.

Um feststellen zu können, wann der Pralldämpfer 1 verriegelt werden soll, wird die Relativgeschwindigkeit zwischen Pralldämpferkolben 3 und Pralldämpferzylinder 2 detektiert und mit einem vorgegebenen Schwellenwert verglichen, bei dem der Pralldämpfer 1 seine Dämpfungsfunktion gerade noch durch Verschieben des Pralldämpferkolbens 3 erfüllen kann. Zu diesem Zweck befindet sich am äußeren Umfang des Pralldämpferzylinders 2 eine Detektoreinrichtung 9. Es handelt sich hier z. B. um eine pneumatische Detektoreinrichtung 9, die druckgesteuert ist.

Die Detektoreinrichtung 9 besteht aus einem Druckgehäuse 10, das sich am vorderen Umfangsrand des Pralldämpferzylinders 2 befindet, also an der dem Pralldämpferkolben 3 zugewandten Umfangsseite. Im Inneren des Druckgehäuses 10 befindet sich ein Schaltglied 11, durch das das Innere des Druckgehäuses 10 in zwei Kammern unterteilt wird. Die eine Kammer steht über eine Druckgehäuseöffnung 12 mit der Atmosphäre in Verbindung, während die andere Kammer über eine zylinderseitige Öffnung 13 mit demjenigen Innenraum des Pralldämpferzylinders 2 in Verbindung steht, der, in Bewegungsrichtung des Pralldämpferkolbens 3 gesehen, hinter der Kolbenplatte 5 liegt. In der genannten anderen Kammer befindet sich eine Steuerfeder 14, um das Schaltglied 11 abzustützen. Das Schaltglied 11 kann aus elektrisch leitendem Material bestehen oder mit einem solchen beschichtet sein und ist einerseits mit einem ersten Anschluß 15 verbunden, der aus dem Druckgehäuse 10 herausgeführt ist. Ein zweiter Anschluß 16 ist ebenfalls ins Innere des Druckgehäuses 10 hineingeführt, steht jedoch in Ruhestellung des Schaltglieds 11 nicht mit diesem in Kontakt. Die Anschlüsse 15 und 16 sind gegenüber dem Druckgehäuse 10 elektrisch isoliert, wobei das Druckgehäuse 10 auch aus elektrisch nichtleitendem Material bestehen kann.

Im nachfolgenden wird die Funktionsweise der Detektoreinrichtung näher beschrieben. Befindet sich der Pralldämpferkolben 3 in seiner Ruhestellung bzw. Ausgangsstellung, wird der Träger 6 bzw. Stoßfänger also nicht druckbelastet, so liegt die Kolbenplatte 5 praktisch an der inneren Stirnseite des Pralldämpferzylinders 2 an, in der sich die Öffnung 7 befindet. Gleichzeitig verschließt dabei die Kolbenplatte 5 die zylinderseitige Öffnung 13 in der Zylinderwand des Pralldämpferzylinders 2. Bei normaler Belastung des Trägers 6, also bei nur geringer Relativgeschwindigkeit zwischen Pralldämpferzylinder 2 und Pralldämpferkolben 3, wird beim Einfahren des Pralldämpferkolbens 3 in den Pralldämpferzylinder 2 nur ein geringer Unterdruck im Raum hinter der Kolbenplatte 5 erzeugt, so daß die Druckdifferenz zwischen beiden Kammern im Inneren des Druckgehäuses 10 nicht groß genug wird, um das Schaltglied 11 entgegen der Steuerfeder 14 zu bewegen. Demzufolge wird auch kein Kontakt zwischen dem Schaltglied 11 und dem zweiten Anschluß 16 erhalten. Erst wenn der Pralldämpferkolben 3 mit einer relativ großen Geschwindigkeit in den Pralldämpferzylinder 2 hineingefahren wird, wird der Unterdruck im Raum hinter der Kolbenplatte 5 einen solchen Wert annehmen, daß der atmosphärische Druck stark genug ist, jetzt das Schaltglied 11 entgegen der Kraft der Steuerfeder 14 zu bewegen, um somit den Kontakt zwischen Schaltglied 11 und zweitem Anschluß 16 herzustellen. Dabei wird ein Stromkreis über die Kontakte 15 und 16 geschlossen, so daß ein Arbeitsstrom fließen kann.

Mit Hilfe der Steuerfeder 14 läßt sich somit praktisch der Schwellenwert für die Relativgeschwindigkeit zwischen Pralldämpferkolben 3 und Pralldämpferzylinder 2 voreinstellen. Diese Voreinstellung erfolgt in Abhängigkeit der Dämpfungseigenschaften des Pralldämpfers 1 und im Hinblick darauf, daß dann, wenn die Aufprallgeschwindigkeit zu groß ist und der Pralldämpfer 1 diese nicht mehr durch seinen normalen Betrieb bei Verschiebung des Pralldämpferkolbens 3 auffangen kann, Pralldämpferkolben 3 und Pralldämpferzylinder 2 relativ zueinander blockiert bzw. verriegelt werden sollen. Diese Verriegelung erfolgt mit anderen Worten dann, wenn der Stromkreis zwischen dem Schaltglied 11 und dem zweiten Anschluß 16 geschlossen ist und somit der Arbeitsstrom fließen kann.

Mit Hilfe dieses Arbeitsstroms wird ein Sperrmechanismus zur Verriegelung von Pralldämpferkolben 3 und Pralldämpferzylinder 2 gesteuert. Dieser Sperrmechanismus trägt das Bezugszeichen 17 und befindet sich außen an der vorderen Stirnseite des Pralldämpferzylinders 2, also an derjenigen Stirnseite, in der sich die Öffnung 7 befindet. Fließt ein Arbeitsstrom über den ersten Anschluß 17, das Schaltglied 11 und den zweiten Anschluß 16, so führt dies dazu, daß ein Verriegelungsbolzen 18 des Sperrmechanismus 17 in Eingriff mit dem Pralldämpferkolben 3 gebracht wird, um zu verhindern, daß sich dieser weiter ins Innere des Pralldämpferzylinders 2 hineinbewegen kann. Beispielsweise kann der Verriegelungsbolzen 18 in einer Umfangsnut des faltenbalgartig ausgebildeten Bereichs 8 des Kolbenzylinders 4 zu liegen kommen, wobei sich der Verriegelungsbolzen 18 gleichzeitig mittelbar oder unmittelbar am Pralldämpferzylinder 2 abstützt. Die Verriegelung zwischen Pralldämpferkolben 3 und Pralldämpferzylinder 2 folgt sofort nach der Messung der genannten Relativgeschwindigkeit, so daß zu diesem Zeitpunkt der Pralldämpferkolben 3 noch nicht sehr weit in den Pralldämpferzylinder 2 eingefahren worden ist. Der faltenbalgartige Bereich 8 des Kolbenzylinders 4 liegt somit noch außerhalb des Pralldämpferzylinders 2 und steht daher für eine plastische Verformung voll zur Verfügung.

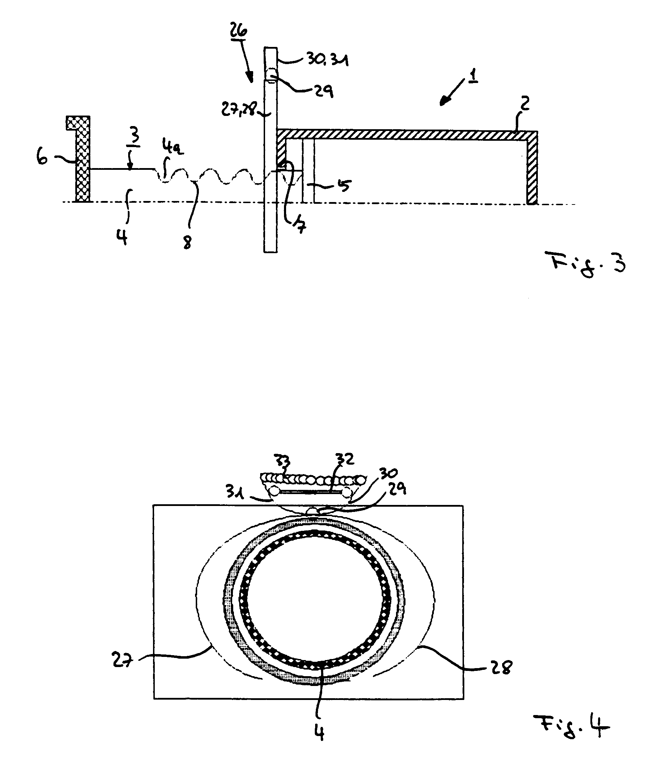

Die Fig. 2 zeigt den genaueren Aufbau des Sperrmechanismus 17. In einem Block 19 des Sperrmechanismus 17 befindet sich ein Führungskanal 20 zur Führung des Verriegelungsbolzens 18. Dieser ist im Führungskanal 20 gleitend gelagert. Der Führungskanal 20 erstreckt sich bis über den Umfang des Kolbenzylinders 4 hinaus und ist beidseitig verschlossen. Er kann beispielsweise als Sacklochbohrung ausgebildet sein. Die Eingangsöffnung des Führungskanals 20 ist dabei mit einem unbeweglichen Verschluß 21 verschlossen.

Der Verriegelungsbolzen 18 ist einerseits über einen Schmelzdraht 22 mit dem Verschluß 21 fest verbunden, während andererseits eine den Schmelzdraht 22 umgebende Druckfeder 23 vorhanden ist, die sich am Verschluß 21 abstützt und versucht, den Verriegelungsbolzen 18 in Richtung des Kolbenzylinders 4 zu treiben. Aufgrund des vorhandenen Schmelzdrahts 22 wird jedoch der Kraft der Feder 23 entgegengewirkt, so daß der Verriegelungsbolzen 18 zunächst in seiner Ruhelage verbleibt, die außerhalb des Kolbenzylinders 4 liegt.

Wie die Fig. 2 weiter erkennen läßt, ist der Schmelzdraht 22 an seinen beiden Enden mit jeweils einem Anschlußdraht 24, 25 verbunden, über die dem Schmelzdraht 22 ein Strom zugeführt wird, damit dieser schmilzt. Der Strom kann beispielsweise der Arbeitsstrom sein, der auch über die Anschlüsse 15 und 16 der Detektoreinrichtung fließt, wenn das Schaltglied 11 mit dem zweiten Anschluß 16 in Kontakt kommt, oder ein davon abgeleiteter Strom. In diesem Fall überschreitet die Relativgeschwindigkeit zwischen Pralldämpferkolben 3 und Pralldämpferzylinder 2 den vorgegebenen Schwellenwert, so daß der Arbeitsstrom letztlich dafür sorgt, daß die Druckfeder 23 nach Schmelzen des Schmelzdrahts 22 den Verriegelungsbolzen 18 in Richtung zum Kolbenzylinder 4 schießt. Der Verriegelungsbolzen 18 wird dabei in eine Querrille 4a in Fig. 2 des Kolbenzylinders 4 hineingeführt und kommt darin zu liegen. Er blockiert somit die Längsbewegung des Pralldämpferkolbens 3, da der Verriegelungsbolzen 18 mit seinen Enden nach wie vor im Führungskanal 20 verbleibt und sich somit weiterhin am Block 19 bzw. mittelbar am Pralldämpferzylinder 2 abstützt. Es steht nunmehr der faltenbalgartige Umfangsbereich 8 des Kolbenzylinders 4 für eine plastische Verformung zur Verfügung.

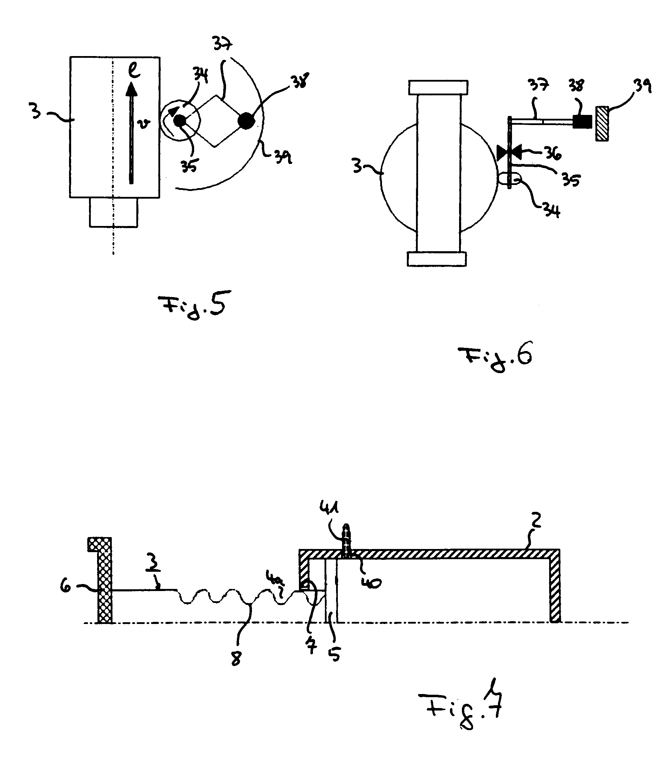

Die Fig. 3 und 4 zeigen ein weiteres Ausführungsbeispiel eines Sperrmechanismus bei einem Stoßfängersystem nach der Erfindung. Gleiche Teile wie in den Fig. 1 und 2 sind dabei mit den gleichen Bezugszeichen versehen.

Der Sperrmechanismus trägt das Bezugszeichen 26 und befindet sich an der vorderen Stirnseite des Pralldämpferzylinders 2, also an der dem Pralldämpferkolben 3 zugewandten Stirnseite. Die Detektoreinrichtung ist in Fig. 3 der Übersicht wegen nicht dargestellt, kann aber in gleicher Weise wie die in Fig. 1 gezeigte Detektoreinrichtung 9 aufgebaut sein.

Gemäß den Fig. 3 und 4 weist der Sperrmechanismus 26 zwei halbkreisförmig gebogene Klammern 27 und 28 auf, die den Kolbenzylinder 4 außen umgreifen. Sie stehen im Normalzustand vom Kolbenzylinder 4 ab und haben mit ihm keinen Kontakt. Beide Klammern 27 und 28 sind an einem Ende um einen gemeinsamen Drehpunkt 29 drehbar gelagert, wobei die Klammern jeweils einen sich über den Drehpunkt 29 fortsetzenden Ansatz 30, 31 aufweisen, dessen Krümmung entgegengesetzt zur Krümmung der jeweiligen Klammer verläuft. Zwischen den freien Enden der Ansätze 30, 31 befindet sich ein Schmelzdraht 32, der verhindert, daß sich die Ansätze 30, 31 aufeinander zu bewegen können. Parallel zum Schmelzdraht 32 und zwischen den freien Enden der Ansätze 30, 31 befindet sich ebenfalls eine Zugfeder 33, die die Ansätze 30, 31 um den Drehpunkt 29 aufeinander zu bewegen möchte. Diese Bewegung wird zunächst durch den Schmelzdraht 32 verhindert und somit auch eine Bewegung der Klammern 27, 28 auf den Kolbenzylinder 4 zu.

Sobald die nicht dargestellte Detektoreinrichtung feststellt, daß die Relativgeschwindigkeit zwischen Pralldämpferkolben 3 und Pralldämpferzylinder 2 den vorgegebenen Schwellenwert überschreitet, wird durch sie der genannte Arbeitsstrom erzeugt, der auch über den Schmelzdraht 32 fließt. Der Schmelzdraht 32 wird dabei zerstört, so daß jetzt die Zugfeder 33 die Ansätze 30, 31 um den Drehpunkt 29 aufeinander zu bewegen kann. Gleichzeitig drehen sich dabei die Klammern 27, 28 um den Drehpunkt 29 (Drehachse) in Richtung zum Kolbenzylinder 4 und greifen in Querrillen 4a ein, die sich am Umfang des Kolbenzylinders 4 befinden. Da sich die Klammern 27, 28 andererseits an der vorderen Stirnseite des Pralldämpferzylinders 2 abstützen, wird dadurch eine weitere Bewegung des Pralldämpferkolbens 3 in den Pralldämpferzylinder 2 hinein blockiert. Der Kolbenzylinder 4 steht damit für eine plastische Verformung zur Verfügung, um die auf den Träger 6 wirkenden Kräfte abzufangen.

Eine weitere Ausführungsform einer Detektoreinrichtung ist in den Fig. 5 und 6 dargestellt. Es handelt sich hier um eine Fliehkraft-Detektoreinrichtung.

Bewegt sich der Pralldämpferkolben 3 mit einer Geschwindigkeit v in axialer Längsrichtung l, so treibt er ein Reibrad 34 an, das auf einer Drehachse 35 befestigt ist, die senkrecht zur Längsrichtung l liegt. Das Reibrad 34 läuft dabei auf einer Geraden parallel zur Längsrichtung l am Umfang des Pralldämpferkolbens 3 ab, wenn sich dieser verschiebt. Die Achse 35 ist in einem Lager 36 gelagert.

Je nach Geschwindigkeit des Pralldämpferkolbens 3 wird das Reibrad 34 mehr oder weniger schnell gedreht. Dadurch dreht sich auch die Achse 35 mehr oder weniger schnell, die starr mit dem Reibrad 34 gekoppelt ist. An der Achse 35 ist über einen Hebelmechanismus 37 ein Gewicht 38 befestigt. Dieser Hebelmechanismus 37 ist nachgiebig, so daß sich der Abstand des Gewichts 38 von der Achse 35 in Abhängigkeit der Rotationsgeschwindigkeit der Achse 35 bzw. des Reibrads 34 ändern kann. Je größer diese Rotationsgeschwindigkeit ist, desto größer wird der Abstand des Gewichts 38 von der Achse 35. Bei einer bestimmten Rotationsgeschwindigkeit des Reibrads 34 schlägt das Gewicht 38 gegen einen Gegenring 39, und zwar dann, wenn die Bewegungsgeschwindigkeit v des Pralldämpferkolbens 3 bzw. die Relativgeschwindigkeit zwischen ihm und dem Pralldämpferzylinder 2 den vorgegebenen Schwellenwert überschreitet.

Die Achse 35, der Hebelmechanismus 37, das Gewicht 38 und der Gegenring 39 bilden einen elektrischen Schaltkreis, bestehen also aus elektrisch leitendem Material oder sind mit einem solchen beschichtet. Schlägt das Gewicht 38 gegen den Gegenring 39, wird der Schaltkreis geschlossen, so daß es zu einem Stromfluß kommen kann. Dieser Stromfluß entspricht dem Arbeitsstrom, der bereits im Zusammenhang mit der Detektoreinrichtung 9 nach Fig. 1 diskutiert worden ist. Der genannte Arbeitsstrom kann jetzt über einen der Schmelzdrähte 22 bzw. 32 in den Fig. 2 oder 4 fließen, um auf diese Weise den jeweiligen Sperrmechanismus zu aktivieren, der in Verbindung mit der in den Fig. 5 und 6 dargestellten Detektoreinrichtung arbeiten kann.

Eine noch andere Ausgestaltung einer Detektoreinrichtung ist in der Fig. 7 gezeigt. Hier ist der Übersicht wegen der Sperrmechanismus fortgelassen, der in Übereinstimmung mit den Fig. 1 und 2 bzw. 3 und 4 ausgebildet sein kann. Gleiche Teile wie in Fig. 1 sind dabei mit den gleichen Bezugszeichen versehen.

Der Pralldämpferzylinder 2 weist in seiner Umfangswand in der Nähe seines vorderen und dem Träger 6 zugewandten Endes eine Durchgangsöffnung 40 auf, in die eine Lichtschranke 41 eingesetzt ist. Die Lichtschranke 41 dient dazu, die Bewegung der Kolbenplatte 5 zu detektieren. Diese Kolbenplatte 5 weist eine bestimmte Dicke auf, die in Längsrichtung des Pralldämpferkolbens 3 liegt, so daß sich durch Detektion der Vorderkante und der Hinterkante der Kolbenplatte 5 die Geschwindigkeit des Pralldämpferkolbens 3 bestimmen läßt. Die Lichtschranke 41 besteht aus einem lichtaussendenden und aus einem lichtempfangenden Element. Ist die Kolbenplatte 5 nicht vor der Lichtschranke 41 positioniert, kann das Licht aus dem lichtaussendenden Element nicht zum lichtempfangenden Element gelangen, da in diesem Fall kein Umlenk- bzw. Reflexionselement vor der Lichtschranke zu liegen kommt. Sobald sich jedoch die Kolbenplatte 5 vor die Lichtschranke schiebt, wird das aus dem lichtaussendenden Element austretende Licht am Umfang der Kolbenplatte 5 reflektiert, so daß es zum lichtempfangenden Element gelangen kann. Die Kolbenplatte 5 muß daher an ihrem Umfang ein genügend hohes Reflexionsvermögen aufweisen. Die Bestimmung der Geschwindigkeit des Pralldämpferkolbens 3 kann z. B. mit Hilfe einer nicht dargestellten Recheneinheit durchgeführt werden, die aus den optischen Signalen gewonnene elektrische Signale empfängt. Bei Überschreiten des Schwellenwerts durch die Relativgeschwindigkeit zwischen Pralldämpferkolben 3 und Pralldämpferzylinder 2 wird wiederum ein Stromkreis geschlossen, so daß der genannte Arbeitsstrom einen Sperrmechanismus aktivieren kann, beispielsweise den in den Fig. 1 und 2 oder den in den Fig. 3 und 4 gezeigten.

## Patentansprüche

1. Stoßfängersystem für ein Kraftfahrzeug, mit
- wenigstens einem Pralldämpfer (1), der einen Pralldämpferkolben (3) und einen ihn aufnehmenden Pralldämpferzylinder (2) aufweist, und
- einer Detektoreinrichtung (9; 34 bis 39; 41) zur Ermittlung der Relativgeschwindigkeit zwischen Pralldämpferkolben (3) und Pralldämpferzylinder (2),
**dadurch gekennzeichnet**, daß
- ein Sperrmechanismus (17; 26) vorgesehen ist, der unmittelbar nach Überschreiten eines vorgebbaren Schwellenwerts durch die Relativgeschwindigkeit die Relativbewegung zwischen Pralldämpferkolben (3) und Pralldämpferzylinder (2) blockiert, und
- der Pralldämpfer (1) so ausgebildet ist, daß er nach Blockieren der Relativbewegung zwischen Pralldämpferkolben (3) und Pralldämpferzylinder (2) selbst Verformungsenergie aufnehmen kann.

2. Stoßfängersystem nach Anspruch 1, **dadurch gekennzeichnet**, daß nur der Pralldämpferkolben (3) zur Aufnahme der Verformungsenergie verformbar ist.

3. Stoßfängersystem nach Anspruch 2, **dadurch gekennzeichnet**, daß der Pralldämpferkolben (3) faltenbalgartig ausgebildet ist.

4. Stoßfängersystem nach einem der Ansprüche 1 bis 3, **dadurch gekennzeichnet**, daß der Sperrmechanismus einen senkrecht zur Längsrichtung des Pralldämpferkolbens (3) in diesen einfahrbaren Verriegelungsbolzen (18) aufweist, der sich am Pralldämpferzylinder (2) abstützt.

5. Stoßfängersystem nach einem der Ansprüche 1 bis 3, **dadurch gekennzeichnet**, daß der Sperrmechanismus halbringförmige Verriegelungselemente (27, 28) aufweist, die in eine Umfangsnut (4a) des Pralldämpferkolbens (3) einführbar sind und sich am Pralldämpferzylinder (2) abstützen.

6. Stoßfängersystem nach Anspruch 4 oder 5, **dadurch gekennzeichnet**, daß der Pralldämpferzylinder (2) relativ zum Kraftfahrzeug fest positioniert ist.

7. Stoßfängersystem nach einem der Ansprüche 1 bis 6, **dadurch gekennzeichnet**, daß die Detektoreinrichtung (9) einen Schalter (11) aufweist, der auf einen vorbestimmten Unterdruck anspricht, welcher sich bei Bewegung des Pralldämpferkolbens (3) hinter seiner vorderen Stirnseite im Pralldämpferzylinder (2) aufbaut.

8. Stoßfängersystem nach einem der Ansprüche 1 bis 6, **dadurch gekennzeichnet**, daß die Detektoreinrichtung einen Fliehkraftschalter (34 bis 39) aufweist, auf den die Längsbewegung des Pralldämpferkolbens (3) übertragbar ist.

9. Stoßfängersystem nach einem der Ansprüche 1 bis 6, **dadurch gekennzeichnet**, daß die Detektoreinrichtung einen optischen Detektor (41) zur Erfassung eines vorbestimmten Axialabschnitts (5) des Pralldämpferkolbens (3) sowie einen Schalter aufweist, der betätigt wird, wenn die Zeitdauer, in der der vorbestimmte Axialabschnitt (5) erfaßt wird, kürzer als eine vorbestimmte Zeitdauer ist.

10. Stoßfängersystem nach einem der Ansprüche 7 bis 9, **dadurch gekennzeichnet**, daß der Schalter geschlossen wird, um einen Arbeitsstrom zu erzeugen.

11. Stoßfängersystem nach Anspruch 10, **dadurch gekennzeichnet**, daß der Arbeitsstrom durch einen Schmelzdraht (22; 32), der den Verriegelungsbolzen (18) bzw. die Verriegelungselemente (27, 28) entgegen der Kraft einer Feder (23, 33) außerhalb des Pralldämpferkolbens (3) hält, hindurchleitbar ist, um diesen zu durchtrennen.

## Claims

1. Bumper system for a motor vehicle, having
- at least one impact absorber (1) which incorporates an impact absorbing piston (3) and an impact absorbing cylinder (2) accommodating the latter, and
- a detector device (9; 34 to 39; 41) for determining the relative speed between the impact absorbing piston (3) and the impact absorbing cylinder (2), characterised in that
- a disabling mechanism (17; 26) is provided which locks the relative movement between the impact absorbing piston (3) and the impact absorbing cylinder (2) immediately after the relative speed exceeds a presettable threshold value, and
- the impact absorber (1) is so constructed that it is able to absorb even deformation energy after the relative movement between the impact absorbing piston (3) and the impact absorbing cylinder (2) has been locked.

2. Bumper system according to claim 1, characterised in that only the impact absorbing piston (3) is adapted to be deformed to absorb the deformation energy.

3. Bumper system according to claim 2, characterised in that the impact absorbing piston (3) is constructed in the manner of a bellows.

4. Bumper system according to any of claims 1 to 3, characterised in that the disabling mechanism has an interlocking pin (18) adapted to be driven perpendicular to the longitudinal direction of the impact absorbing piston (3) into the latter, which pin (18) rests on the impact absorbing cylinder (2).

5. Bumper system according to any of claims 1 to 3, characterised in that the disabling mechanism has half-ring shaped interlocking elements (27, 28) which can be introduced into a circumferential groove (4a) on the impact absorbing piston (3) and rest on the impact absorbing cylinder (2).

6. Bumper system according to claim 4 or 5, characterised in that the impact absorbing cylinder (2) is fixedly positioned relative to the motor vehicle.

7. Bumper system according to any of claims 1 to 6, characterised in that the detector device (9) has a switch (11) which reacts to a predetermined underpressure which builds up in the impact absorbing cylinder (2) when the impact absorbing piston (3) moves behind its front end face.

8. Bumper system according to any of claims 1 to 6, characterised in that the detector device has a centrifugal switch (34 to 39) to which the longitudinal movement of the impact absorbing piston (3) can be transmitted.

9. Bumper system according to any of claims 1 to 6, characterised in that the detector device has an optical detector (41) for registering a predetermined axial section (5) of the impact absorbing piston (3) and has a switch which is operated whenever the time interval over which the predetermined axial section (5) is registered is shorter than a predetermined time interval.

10. Bumper system according to any of claims 7 to 9, characterised in that the switch is closed in order to generate an operating current.

11. Bumper system according to claim 10, characterised in that the operating current can be passed along a fusible wire (22; 32) which holds the interlocking pin (18) or interlocking elements (27, 28) against the force of a spring (23, 33) outside the impact absorbing piston (3) so as to sever same.

## Revendications

1. Système pare-chocs pour un véhicule automobile, comprenant
- au moins un amortisseur de choc (1) comportant un piston amortisseur de choc (3) et un cylindre amortisseur de choc (3) oui reçoit celui-ci, et
- un dispositif détecteur (9; 34 à 38; 41) pour la détermination de la vitesse relative entre le piston amortisseur de choc (3) et le cylindre amortisseur de choc (2),
caractérisé
- en ce qu'il est prévu un mécanisme de blocage (17; 26) qui bloque le mouvement relatif entre le piston amortisseur de choc (3) et le cylindre amortisseur de choc (2) immédiatement après que la vitesse relative a dépassé une vaeur seuil prédéfinissable, et
- en ce que l'amortisseur de choc (1) est réalisé de telle manière qu'à la suite du blocage du mouvement relatif entre le piston amortisseur de choc (3) et le cylindre amortisseur de choc (2), il puisse absorber par lui-même l'énergie de déformation.

2. Système pare-chocs selon la revendication 1, caractérisé en ce que le piston amortisseur de choc (3) est seul à être déformable pour l'absorption de l'énergie de déformation.

3. Système pare-chocs selon la revendication 2, caractérisé en ce que le piston amortisseur de choc (3) est réalisé à la manière d'un soufflet.

4. Système pare-chocs selon l'une quelconque des revendications 1 à 3, caractérisé en ce que le mécanisme de blocage comporte une broche de verrouillage (18) qui peut pénétrer dans le piston amortisseur de choc (3) perpendiculairement à la direction longitudinale de celui-ci et qui prend appui sur le cylindre amortisseur de choc (2).

5. Système pare-chocs selon l'une quelconque des revendications 1 à 3, caractérisé en ce que le mécanisme de blocage comporte des éléments de verrouillage en forme de demi-anneau (27, 28) qui peuvent pénétrer dans une rainure circonférentielle (4a) du piston amortisseur de choc (3) et qui prennent appui sur le cylindre amortisseur de choc (2).

6. Système pare-chocs selon la revendication 4 ou 5, caractérisé en ce que le cylindre amortisseur de choc (2) est en position fixe par rapport au véhicule automobile.

7. Système pare-chocs selon l'une quelconque des revendications 1 à 6, caractérisé en ce que le dispositif détecteur (9) comporte un interrupteur (11) qui réagit à une dépression prédéterminée qui s'établit dans le cylindre amortisseur de choc (2) au cours du mouvement du piston amortisseur de choc (3), en arrière de la face frontale avant de celui-ci.

8. Système pare-chocs selon l'une quelconque des revendications 1 à 6, caractérisé en ce que le dispositif détecteur comporte un interrupteur à force centrifuge (34 à 39) auquel le mouvement longitudinal du piston amortisseur de choc (3) peut être transmis.

9. Système pare-chocs selon l'une quelconque des revendications 1 à 6, caractérisé en ce que le dispositif détecteur comporte un détecteur optique (41) pour détecter un segment axial prédéterminé (5) du piston amortisseur de choc (3), ainsi qu'un interrupteur qui est actionné lorsque le laps de temps pendant lequel le segment axial prédéterminé (5) est détecté est plus court qu'un laps de temps prédéterminé.

10. Système pare-chocs selon l'une quelconque des revendications 7 à 9, caractérisé en ce que l'interrupteur est fermé pour produire un courant de travail.

11. Système pare-chocs selon la revendication 10, caractérisé en ce que le courant de travail peut passer à travers un fil fusible (22; 32) qui maintient la cheville de verrouillage (18) ou les éléments de verrouillage (27, 28) à l'extérieur du piston amortisseur de choc (3), contre la force antagoniste d'un ressort (23, 33), afin de rompre ce fil.
